# FASCICULE DE BREVET EUROPEEN

(11) **EP 0 518 962 B1**
(45) Date de publication et mention de la délivrance du brevet: **14.12.1994**
(21) Numéro de dépôt: 91905837.0
(22) Date de dépôt: 05.03.1991
(51) Int. Cl.: C04B 12/00

(54) **LIANT GEOPOLYMERE FLUORO-ALUMINO-SILICATE ET PROCEDE D'OBTENTION**
BINDEMITTEL AUF BASIS VON FLUORO-ALUMINO-SILIKAT-GEOPOLYMEREN UND VERFAHREN ZU SEINER HERSTELLUNG
GEOPOLYMERIC FLUORO-ALUMINO-SILICATE BINDER AND PROCESS FOR OBTAINING IT

(30) Priorité: 07.03.1990 FR 9002854
(43) Date de publication de la demande: 23.12.1992
(73) Titulaire: Davidovits, Joseph, F-02100 Saint-Quentin (FR); DAVIDOVICS, Michel, F-60700 Pont-Ste-Maxence (FR); DAVIDOVITS, Nicolas, F-42300 Roanne (FR)
(72) Inventeur: Davidovits, Joseph, F-02100 Saint-Quentin (FR); DAVIDOVICS, Michel, F-60700 Pont-Ste-Maxence (FR); DAVIDOVITS, Nicolas, F-42300 Roanne (FR)
(86) Numéro de dépôt international: FR9100176
(87) Numéro de publication internationale: WO9113840

(56) Documents cités:
- EP-A- 026 687

## Description

L'invention a pour objet la description d'un liant géopolymère permettant la fabrication d'objets possédant d'excellentes tenues mécaniques et thermiques aux températures comprises entre 250°C et 650°C.

Le géopolymère selon l'invention est un fluoro-alumino-silicate dont la composition à l'état déshydraté, exprimée en terme d'oxyde est:

yM₂O:Al₂O₃:xSiO₂,wF²⁻

"x" est une valeur comprise entre 5,5 et 75, "y" est une valeur comprise entre 1 et 20, "w" est une valeur comprise entre 0,5 et 50. Après durcissement, le composé géopolymèrique ainsi obtenu est une solution solide comprenant
a) un géopolymère de type poly(sialate-disiloxo) fluoro-alcalin (M,F)-PSDS de formule 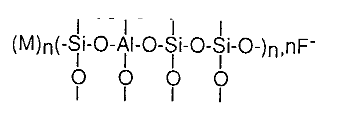
b) un alumino-fluorure alcalin M₃AlF₆
c) une phase siliceuse SiO₂,H₂O, de type Opal CT
dans lequel M désigne un alcalin Na et/ou K, n est le degré de polymérisation.

Dans tout ce qui suit, le terme liant géopolymère, ou durcissement d'une résine géopolymèrique, indique que le durcissement s'effectue par réaction interne du type polycondensation ou du type hydrothermal et qu'il n'est pas le résultat d'un simple séchage, comme c'est généralement le cas pour des liants à base de silicates alcalins.

Les géopolymères alumino-silicates ont été groupés en trois familles, en fonction du rapport atomique Si/Al lequel peut être égal à 1, 2 ou 3. Si l'on adopte l'écriture simplifiée telle qu'elle est utilisée le plus couramment, on distingue:

| | | |
|---|---|---|
| le poly(sialate) | Mₙ(-Si-O-Al-O-)ₙ | ou (M)-PS, |
| le poly(sialate-siloxo) | Mₙ(-Si-O-Al-O-Si-O-)ₙ | ou (M)-PSS, |
| le poly(sialate-disiloxo) | Mₙ(-Si-O-Al-O-Si-O-Si-O-)ₙ | ou (M)-PSDS. |

Comme on peut le lire dans plusieurs articles scientifiques tel par exemple "Geopolymer: room temperature ceramic matrix composites" publié dans Ceram. Eng. Sci. Proc, 1988, Vol.9 (7-8), pp.835-41, cf. Chemical Abstracts 110-080924, ou encore "Geopolymer Chemistry and Properties" publié dans Geopolymer '88, Vol. 1, pp. 19-23, Université de Technologie de Compiègne, ou encore dans la publication internationale WO 88/02741 de la demande de brevet PCT/FR 87/00396 (EP 0288502), l'art antérieur décrit la fabrication
des poly(sialates) Mₙ(-Si-O-Al-O-)ₙ (Na)-PS/(K)-PS
et
des poly(sialate-siloxo) Mₙ(-Si-O-Al-O-Si-O-)ₙ (Na)-PSS/(K)-PSS.
Il n'existe pas, dans l'art antérieur, de procédé permettant de fabriquer le
poly(sialate-disiloxo) Mₙ(-Si-O-Al-O-Si-O-Si-O-)ₙ (M)-PSDS.
La demande de brevet français 90.02853, intitulée "Procédé d'obtention d'un géopolymère alumino-silicate et produits obtenus", décrit un procédé d'obtention du
poly(sialate-disiloxo) Mₙ(Si-O-Al-O-Si-O-Si-O-)ₙ (M)-PSDS.

Les géopolymères alumino-silicates s'apparentent de part leur constitution et leur structure tridimensionnelle à la catégorie des zéolites et feldspathoïdes. Or, on sait que pour ces matériaux, la stabilité thermique est fonction du rapport Si/Al. Plus le rapport est élevé et plus la stabilité est grande. L'homme de métier peut donc très facilement comprendre l'intérêt présenté par l'emploi de géopolymères de type
( M)-PSDS, Mₙ(-Si-O-Al-O-Si-O-Si-O-)ₙ de rapport Si/Al ≧3,
par rapport au
(M)-PSS, Mₙ(-Si-O-Al-O-Si-O-)ₙ de rapport Si/Al =2
et au
(M)-PS, Mₙ(-Si-O-Al-O-)ₙ de rapport Si/Al = 1.

L'objet principal de l'invention est la description de composés géopolymèriques ayant un rapport Si/Al ≧3, pouvant même aller dans certains exemples de l'invention jusque Si/Al = 75. On sait que les zéolites riches en silicium sont fabriquées, comme toutes les autres zéolites, dans des conditions hydrothermales et dans un milieu réactionnel fortement dilué. Le rapport molaire M₂O:H₂O est de l'ordre de 1:50 à 1 : 100 et les produits zéolites obtenus sont des poudres extrêmement poreuses.

Au contraire, les géopolymères sont des liants permettant la fabrication d'objets à caractère céramique, soit par agglomération de charges, soit par imprégnation de fibres ou tissus; l'expérience accumulée dans la fabrication des géopolymères, comme décrite dans les brevets EP 026.687, EP 066.571, EP 288.502 (WO 88/02741)
déposés par la demanderesse, implique une forte concentration du milieu réactionnel avec un rapport molaire M₂O:H₂O supérieur à 1 : 17,5 dans le cas de Na₂O, ou de l'ordre de 1 : 12,0 dans le cas de K₂O.

Il n'existait pas, jusqu'à maintenant, de moyen permettant d'obtenir un mélange réactionnel ayant un rapport Si/Al >3, et un rapport molaire M₂O:H₂O supérieur à 1:17,5. Dans le cadre de l'invention, le silicium participe à la réaction chimique sous la forme dissoute de silicate alcalin possédant un rapport molaire M₂O:SiO₂ inférieur à 1:4,0, et dont la concentration en matière solide doit être supérieure à 60% en poids. Au contraire, les silicates alcalins industriels de ce type sont généralement extrêmement dilués, la concentration en matière solide étant inférieure à 25% en poids et ne permettent pas d'obtenir le mélange réactionnel préconisé par la présente invention.

L'objet secondaire de la présente invention est l'obtention d'une solution de silicate alcalin ayant un rapport molaire M₂O:SiO₂ inférieur à 1:4,0, et dont la concentration en matière solide est supérieure à 60% en poids.

La simple augmentation du rapport Si/Al dans la résine géopolymère ne permet pas d'obtenir des liants géopolymèriques pouvant être utilisés dans les températures comprises entre 250°C et 650°C, et éventuellement au delà. L'addition de la solution concentrée de silicate alcalin ne permet pas, dans les conditions réactionelles décrites dans présente invention, d'augmenter le rapport Si/Al dans le géopolymère poly(sialate-disiloxo) (M)-PSDS, au delà de Si/Al=6,5. Pour des valeur Si/Al >6,5, l'objet céramique obtenu en utilisant ce liant est instable à haute température. Il boursoufle, ce qui montre qu'il existe une phase purement silicate, très fusible et qui n'a pas pris part à la réticulation tridimensionnelle. La présente invention est venue de l'obligation d'éviter la formation de cette phase visqueuse qui empêche l'utilisation à des températures supérieures à 300°C.

En ajoutant, par exemple, un produit connu pour permettre le durcissement des solutions de silicates alcalins, comme le fluosilicate de sodium Na₂SiF₆, la demanderesse a eu la surprise d'obtenir des matériaux géopolymèriques étonnamment aptes à l'usage dans des températures comprises entre 250°C et 650°C. Les liants ainsi obtenus sont du type fluoro-alumino-silicate alcalin.

Les composés géopolymèriques fluoro-alumino-silicates se distinguent des autres géopolymères obtenus dans l'art antérieur, par leur très faible retrait lors de la première montée en température, leur très forte densité, et leurs excellentes propriétés mécaniques aux températures comprises entre 250°C et 650°C.

Comme on peut le lire dans les brevets cités ci-dessus décrivants les composés géopolymèriques et les liants géopolymères de type Si/Al<3, il est absolument nécessaire d'ajouter des charges fines pour éviter la formation de fissures et donc la destruction des matériaux par la température. Ceci est dû au retrait très important que subissent les poly(sialate), M-PS, et poly(sialate-siloxo), M-PSS, lors de la déshydroxylation. Une description détaillée de ce phénomène est d'ailleurs donnée dans l'article scientifique "Geopolymer Chemistry and Properties" publiée dans Geopolymer '88, Vol. 1, pp25-48, Université de Technologie de Compiègne.

Certaines résines géopolymères de la marque GEOPOLYMITE, commercialisées par la société GEOPOLYMERE Sarl, France, contiennent déjà des éléments fluorés. Ainsi par exemple la GEOPOLYMITE 50, dont l'analyse est donnée dans le tableau 1 de la demande internationale WO 88/02741, contient 4,87% en poids de F-. Ce fluor provient d'une charge, à savoir le fluorure de calcium F₂Ca, comme décrit dans les exemples 1) et 2) du brevet Européen EP 153.097, dans l'exemple 4) du brevet Européen EP 26.687, l'exemple 4) du brevet Européen EP 66.571. Le fluorure de calcium F₂Ca est parfaitement insoluble et est très différent du fluosilicate de sodium Na₂SiF₆ soluble employé dans la présente invention.

Les composés géopolymèriques de la présente invention ont un très faible retrait, et une très faible déperdition d'eau, à la montée en température. Sans charge, le retrait est de 1,8% à 600°C, alors que les géopolymères de l'état antérieur seraient entièrement fissurés. Le retrait n'est que de 0,03% à 600°C pour un matériau chargé avec 60% en poids de corindon Al₂O₃. Lorsque le liant géopolymèrique de l'invention est utilisé comme matrice d'un composite fibreux, ce retrait est inférieur à 0,01%.

On pense que l'absence de retrait et de fissuration est due à la quantité moindre d'eau dite zéolithique fixée dans la structure. Cette eau serait remplacée par des ions F⁻ et des molécules de silice SiO₂ dans la structure tridimensionnelle du poly(sialate-disiloxo), (M)-PSDS 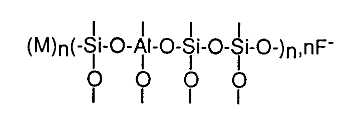
Les procédés décrits dans la présente invention permettent l'obtention de géopolymères fluoro-alumino-silicates alcalins dont la composition à l'état déshydraté, exprimée en terme d'oxyde est:

yM₂O:Al₂O₃:xSiO₂, wF²⁻

"x" est une valeur comprise entre 5,5 et 75, "y" est une valeur comprise entre 1 et 20, "w" est une valeur comprise entre 0,5 et 50. Après durcissement, les géopolymères sont des composés géopolymèriques constitués d'une solution solide comprenant
a) un géopolymère de type poly(sialate-disiloxo) fluoro-alcalin (MF)-PSDS de formule 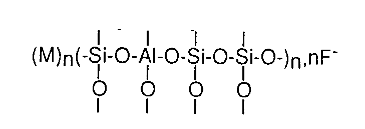
b) un alumino-fluorure alcalin M₃AlF₆
c) une phase siliceuse SiO₂,H₂O, de type Opal CT
dans lequel M désigne un alcalin Na et/ou K, n est le degré de polymérisation, le dit géopolymère poly(sialate-disiloxo) fluoro-alcalin ayant un cation Al en coordination (IV), de type Al(Q₄) comme déterminé par le spectre d'analyse MAS-NMR pour ²⁷Al, la dite phase siliceuse SiO₂,H₂O possédant une courbe dilatomètrique caractéristique de SiO₂ en phase cristobalite, le dit alumino-fluorure alcalin étant déterminé par son spectre de diffraction aux Rayons X.

Les procédés de préparation des géopolymères fluoro-alumino-silicates consistent à faire réagir une résine géopolymère obtenue à partir d'un mélange réactionnel contenant:
a) une solution aqueuse de silicate alcalin de rapport molaire M₂O:SiO₂ compris entre ou égal à:

| | |
|---|---|
| M₂O:SiO₂ | 1:4,0 et 1:6,5 |

dont la concentration est supérieure à 60% en poids et dont la viscosité initiale à 20°C est de 200 mPa.s, puis augmente pour ne pas dépasser 500 mPa.s avant 5 heures à 20°C;
b) un oxyde alumino-silicate (Si₂O₅,Al₂O₂) dans lequel le cation Al est en coordination (IV-V) comme déterminé par le spectre MAS-NMR pour ²⁷Al,
c) un fluosilicate de sodium Na²SiF⁶
Dans le mélange des constituants a)+b)+c) dont la teneur en eau est inférieure à 30% en poids, la viscosité initiale de la résine géopolymère est de 350-500 mPa.s, et le rapport molaire des oxydes compris entre ou égal à:

| | |
|---|---|
| Al₂O₃:M₂O | 1:1,0 et 1:20 |
| Al₂O₃:SiO₂ | 1:5,5 et 1:75 |
| M₂O:H₂O | 1:5,0 et 1:12,0 |
| Al₂O₃:F⁻ | 1:0,5 et 1:50 |

puis à laisser durcir la dite résine géopolymère.

La demanderesse a eu la surprise de découvrir qu'il était en effet possible de fabriquer une solution concentrée de silicate alcalin très riche en SiO₂, à condition d'employer comme matière de départ, de la fumée de silice, dite silice thermique, par opposition aux silices, amorphes fabriquées par condensation des vapeurs de silanes ou par précipitation de solution de silice.

Dans le cadre de l'invention, le terme fumée de silice thermique désigne exclusivement la silice amorphe obtenue à partir de la condensation des vapeurs de SiO résultant de l'électro-fusion, à très haute température, généralement de l'ordre de 2000°C, de composés siliceux; le dit silicate alcalin est essentiellement obtenu par dissolution à l'aide d'une solution concentrée de NaOH et/ou KOH.

Dans un exemple préféré de l'invention, la fumée de silice thermique est spécialement préparée par électro-fusion de sable de zircon.

On pourra également employer des fumées de silices thermiques fabriquées par électro-fusion d'autres matériaux siliceux, en particulier on pourra utiliser les fumées de silice résultant de la production des alliages métalliques ferro-silicium. Dans ce dernier cas il sera parfois nécessaire de faire subir un traitement à ce sous-produit afin d'enlever soit le carbone, soit le silicium métal. La fumée de silice thermique employée dans le cadre de la présente invention contient au plus 10% en poids de Al₂O₃ et au moins 90% en poids de SiO₂.

L'état antérieur de la technique pour ce qui concerne les propriétés des silicates alcalins est parfaitement connu. On trouvera par exemple dans la revue Industrial and Engineering Chemistry, Vol.61, N°4, Avril 1969, pp. 29-44, "Properties of Soluble Silicates" une étude exhaustive sur les propriétés physiques des solutions de silicate alcalin.

Le tableau suivant résume la différence essentielle entre les solutions de l'état antérieur et les silicates alcalins produits dans la présente invention.

| Viscosité à 20°C et concentration de silicates alcalins solubles: | | | | |
|---|---|---|---|---|
| | rapport molaire | | viscosité | concentration |
| *état antérieur* | Na₂O:SiO₂ | 1:4 | 200mPa.s | 25% |
| | K₂O:SiO₂ | 1:4,5 | 200mPa.s | 20% |
| *présente invention exemple 1)* | K₂O:SiO₂ | 1:5,6 | 200mPa.s | 69% |

Les silicates solubles obtenus dans le cadre de l'invention ne sont pas stables dans le temps. Leur viscosité augmente et cette augmentation est fonction de la température. Ainsi à 20°C, la viscosité qui, au départ est de 200 mPa.s, atteindra 500 mPa.s après 5 heures. Ce temps, ou durée de vie ou "pot-life" est très suffisant pour réaliser la géopolymèrisation du poly(sialate-disiloxo) (M)-PSDS, Mn(-Si-O-Al-O-Si-O-Si-O-)n.

Le second réactif permettant la réalisation de l'objet principal de l'invention est l'oxyde alumino-silicate (Si₂O₅,Al₂O₂) ayant le cation Al en coordination (IV-V) comme déterminé par le spectre d'analyse en Résonance Magnétique Nucléaire MAS-NMR pour ²⁷Al; cet oxyde alumino-silicate (Si₂O₅,Al₂O₂) est obtenu par traitement thermique d'alumino-silicates hydratés naturels, dans lesquels le cation Al est en coordination (VI) comme déterminé par le spectre d'analyse en - Résonance Magnétique Nucléaire MAS-NMR pour ²⁷Al.

En effet le spectre MAS-NMR pour ²⁷Al présente deux pics, l'un autour de 50-65 ppm caractéristique de la coordination Al(IV) et l'autre autour de 25-35 ppm que certains auteurs scientifiques définissent comme indiquant la coordination Al(V).

Nous adopterons, dans ce qui suit, la notion de coordination mixte Al(IV-V) pour cet oxyde (Si₂O₅,Al₂O₂).

Le troisième réactif utilisé dans la présente invention est le fluosilicate de sodium Na₂SiF₆ en poudre. Son action est double. Tout d'abord on sait par l'ait antérieur qu'il réagit avec le silicate alcalin avec précipitation de silice SiO₂ colloïdale et formation de fluorure de sodium NaF ou fluorure de potassium KF.

Si la silice colloïdale est amorphe aux rayons X, par contre les fluorures alcalins sont parfaitement cristallisés et facilement détectables par leur digramme de diffraction aux Rayons X. Or, à la grande surprise de la demanderesse, la diffraction aux rayons X n'indique pas la présence de fluorure NaF et/ou KF cristallin.

Au contraire, la diffraction aux rayons X révèle la présence de fluoro-aluminate M₃AlF₆, cryolite Na₃AlF₆ lorsque le milieu réactionnel est entièrement sodique, ou l'elpasolite K₂NaAlF₆ (selon diagramme des poudres fiche ASTM 22-1235) en présence d'un milieu potassique. De plus, à la grande surprise de la demanderesse, la présence de fluoro-aluminate M₃AlF₆ s'accompagne d'un ralentissement très marqué de la vitesse de durcissement de la résine géopolymère.

Ceci est absolument inattendu, puisque généralement le fluosilicate de sodium Na₂SiF₆ sert de durcisseur dans les liants à bases de silicates alcalins, et son action est quelquefois extrêmement rapide.

Ici au contraire, le fluo-silicate de sodium est un retardateur de prise. En effet si on compare les vitesses de durcissement de mélanges réactionnels géopolymères, avec et sans addition de Na₂SiF₆, on constate un très net allongement de la durée de vie de la résine, à 20°C, ou "pot-life".

Dans les exemples décrits dans la demande de brevet déposée conjointement à la présente, décrivant un procédé d'obtention du
poly(sialate-disiloxo) Mn(-Si-O-Al-O-Si-O-Si-O-)n, (M)-PSDS,
le "pot-life" est de 5-10 heures à 20°C, avec une vitesse de durcissement de 30 minutes à 60°C.

Au contraire, l'addition de 10% en poids de Na₂SiF₆, dans ces mêmes mélanges, conduit à un "pot-life" de 48 heures et une vitesse de durcissement de 3 heures à 60°C.

Le fluoro-aluminate M₃AlF₆, comme la cryolite Na₃AlF₆ ou l'elpasolite K₂NaAlF₆, provient de la réaction du fluosilicate de sodium avec le cation Al, plus particulièrement sous la coordination (IV-V). Il provient également de Al₂O₃ amorphe (vraisemblable, ment de coordination IV-V) présent dans la silice thermique. Son point de fusion de l'ordre de 900°C associé à quelques eutectiques à 700°C, indique le domaine d'utilisation des géopolymères selon l'invention.

La silice amorphe SiO₂ précipitée par l'action du fluosilicate se trouve sous une une phase siliceuse hydratée SiO₂,H₂O. de type OPAL CT Plus la quantite de phase siliceuse SiO₂,H₂O de type OPAL CT est importante et plus le caractère cristobalitique du composé géopolymèrique est marqué. Dans ce qui suit le caractère cristobalitique est défini par le décrochement très caractéristique de la courbe dilatation retrait, phase retrait, à 200°C. On peut suivre la concentration en SiO₂, d'une part par l'intensité du décrochement cristobalitique, d'autre part par la valeur du coefficient de dilatation thermique linéaire Δλ.10-6/°C. On distingue ainsi 3 classes de géopolymères (K,Na,F)-PSDS selon la concentration en phase siliceuse SiO₂,H₂O et le coefficient de dilatation thermique linéaire Δλ:
a): Δλ<10.10-6/°C, faiblement cristobalitique;
   Composé géopolymèrique comprenant:
   - 10 à 25 parties en poids de phase siliceuse SiO₂,H₂O, de type OPAL CT
   - 90 à 75 parties en poids de poly(sialate-disiloxo) fluoro-alcalin (K,Na,F)-PSDS de formule 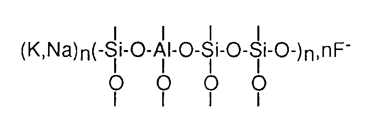
   - 2 à 15 parties en poids d'elpasolite de formule K2NaAlF6;
b): 10.10-6/°C<Δλ<20.10-6/°C, moyennement cristobalitique;
   Composé géopolymèrique comprenant:
   - 26 à 75 parties en poids de phase siliceuse SiO₂,H₂O, de type OPAL CT
   - 74 à 25 parties en poids de poly(sialate-disiloxo) fluoro-alcalin (K,Na,F)-PSDS de formule 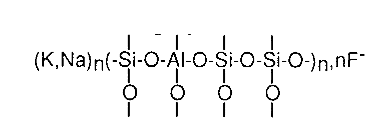
   - 2 à 15 parties en poids d'elpasolite de formule K2NaAlF6;
c): Δλ>20.10-6/°C, fortement cristobalitique;
   Composé géopolymèrique comprenant:
   - 76 à 95 parties en poids de phase siliceuse SiO₂,H₂O, de type OPAL CT
   - 24 à 2 parties en poids de poly(sialate-disiloxo) fluoro-alcalin (K,Na,F)-PSDS de formule 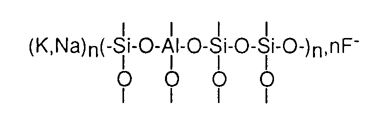
   - 2 à 15 parties en poids d'elpasolite de formule K₂NaAlF₆;
L'emploi de fumée de silice thermique pour fabriquer des solutions de silicates alcalins est déjà connu dans l'art antérieur. Cependant, dans l'art antérieur, l'objectif était de fabriquer des solutions stables pouvant être stockées et exploitées commercialement sous la forme de solution de silicate. Cela explique pourquoi les rapports molaires proposés par l'art antérieur M₂O:SiO₂ sont supérieurs à 1:3,5, au lieu d'être compris entre 1:4,0 et 1:6,5 comme nécessité dans la présente invention. On connait par exemple les différents procédés permettant de fabriquer, à partir des fumées de silice sous-produits des alliages ferro-siliciums, des solutions de silicate de sodium destinées à la fabrication de liants pour fonderie comme dans le brevet EP 059.088, ou les demandes de brevet japonais JP 74134599 (Chemical Abstracts 082:142233, 1975), JP 75140699 (Chemical Abstracts 084-137974, 1976).

Dans le procédé selon la présente invention, la viscosité de la résine géopolymère augmente avec le temps. Elle ne peut donc pas être stockée. C'est la raison pour laquelle, le procédé préféré de l'invention consiste à dissoudre la fumée de silice thermique, en au moins deux fois, ce qui permet le stockage des différents ingrédients.

Dans la méthode préférée d'obtention de la résine géopolymère on prépare séparément:
a) une solution aqueuse de silicate de potasse de rapport molaire

| | |
|---|---|
| K₂O:SiO₂ | 1:1 |

concentrée à 50%;
b) une poudre contenant de l'oxyde alumino-silicate (Si₂O₅.Al₂O₂) dans lequel le cation Al est en coordination (IV-V) comme déterminé par le spectre MAS-NMR pour ²⁷Al, un fluosilicate de sodium Na₂SiF₆ et de la fumée de silice thermique (15SiO₂,AlO₂);
Dans le mélange des constituants a) et b) dont la teneur en eau est inférieure à 30% en poids, la viscosité initiale de la résine géopolymère est de 350-500 mPa.s, et le rapport molaire des oxydes compris entre ou égal à:

| | |
|---|---|
| Al₂O₃:M₂O | 1:1,0 et 1:20 |
| Al₂O₃:SiO₂ | 1:5,5 et 1:75 |
| M₂O:H₂O | 1:5,0 et 1:12,0 |
| Al₂O₃:F⁻ | 1:0,5 et 1:50 |

Puis on laisse maturer la dite résine géopolymère pour permettre la dissolution de la dite silice thermique, la viscosité diminuant alors jusqu'à un minimum de 250-300 mPa.s, puis elle augmente lorsque l'on se trouve dans le début de la phase de géopolymérisation qui est la phase d'utilisation de la résine géopolymère.

La durée de vie ou "pot-life" de la résine géopolymère est très longue, ce qui représente une autre surprise.

En effet, même avec cette quantité relativement importante de fluosilicate de sodium Na₂SiF₆, il n'y a pas précipitation de la solution de silicate alcalin. A 20°C, la résine géopolymère peut être conservée pendant 48 heures.

L'hydroxyde alcalin peut être soit NaOH, soit KOH ou un mélange de NaOH+KOH, bien que la préférence soit d'utiliser l'hydroxyde KOH. Le géopolymère poly(sialate-siloxo) (M,F)-PSDS, Mn(-Si-O-Al-O-Si-O-Si-O-)n,nF sera soit de type (Na,F)-PSDS lorsque le silicate alcalin sera du silicate de sodium, soit de type (K,F)-PSDS avec un silicate de potassium, ou éventuellement de type (K,Na,F)-PSDS lorsque que les silicates de sodium et de potassium seront produits dans le même mélange réactionnel.

Dans la résine géopolymère le rapport molaire des oxydes variera en fonction du coefficient de dilatation thermique désiré. Pour les trois classes définies plus haut nous avons:
a): Δλ<10.10⁻⁶/°C, faiblement cristobalitique:

| | |
|---|---|
| Al₂O₃:M₂O | 1:1,0 et 1:1,6 |
| Al₂O₃:SiO₂ | 1:5,5 et 1:6,6 |
| M₂O:H₂O | 1:11 |
| Al₂O₃:F⁻ | 1:1 et 1:3 |

b): 10.10⁻⁶/°C<Δλ<20.10-6/°C, moyennement cristobalitique:

| | |
|---|---|
| Al₂O₃:M2O | 1:1,65 et 1:3,0 |
| Al₂O₃:SiO₂ | 1:6,65 et 1:10,95 |
| M₂O:H₂O | 1:6,35 |
| Al₂O₃:F⁻ | 1:3,10 et 1:7,95 |

c): Δλ>20.10⁻⁶/°C, fortement cristobalitique:

| | |
|---|---|
| Al₂O₃:M₂O | 1:3,1 et 1:20 |
| Al₂O₃:SiO₂ | 1:11 et 1:73 |
| M₂O:H₂O | 1:6,78 |
| Al₂O3:F⁻ | 1:8,0 et 1:48 |

Les exemples suivants permettent d'illustrer la présente invention. Ils n'ont pas de caractère limitatif sur la portée globale de l'invention telle que présentée dans les revendications. Les rapports entre les oxydes sont des rapports molaires et les parties indiquées sont en poids.

La silice thermique employée dans les exemples a été produite par condensation et refroidissement des vapeurs de SiO et AlO générées par l'électrofusion de sable de zircon. La composition chimique de cette silice thermique est (parties en poids des principaux oxydes):

| | |
|---|---|
| SiO₂ | 94.24 |
| Al₂O₃ | 3.01 |
| CaO | 0.04 |
| Perte au Feu | 0.95 |

correspondant à un oxyde silico-aluminate de formule (15SiO₂,AlO₂).

### Exemple 1)

On prépare la solution de silicate de potasse contenant:

| | |
|---|---|
| silice thermique | 152g |
| KOH | 50g |
| eau | 82.4g |

Pour éviter tout échauffement, la solution contenant l'eau et KOH est mélangée en premier lieu puis laisser à refroidir au réfrigérateur jusque 5°C. On ajoute alors la silice thermique. Après 90 minutes de dissolution à 5°C, le mélange est utilisé à la température ambiante; la viscosité de la solution est de 200 mPa.s. Elle s'épaissit très lentement pour atteindre 500 mPa.s, au bout de 5 heures, lorsque la température du mélange est maintenue à 20°C. Cette solution a un rapport molaire

| | |
|---|---|
| K₂O:SiO₂ | = 1:5,6 |
| K₂O:H₂O | = 1:11,2 |

La concentration en matière solide est de 69% en poids.

### Exemple 2)

A 285g de la solution de l'Exemple 1) on ajoute 45 g d'oxyde alumino-silicate (Si₂O₅.Al₂O₂) dans lequel le cation Al est en coordination (IV-V) comme déterminé par le spectre MAS-NMR pour ²⁷Al, comme défini dans le texte plus haut.

La résine géopolymère ainsi obtenue a une viscosité de 395 mPa.s; elle est coulée dans un moule que l'on porte à l'étuve à 60°C. Le durcissement s'effectue en 30 minutes. On démoule et laisse sécher à 60°C. La densité du géopolymère est d= 1,45 g/ml

### Exemple 3)

A 285g de la solution de l'Exemple 1) on ajoute 45 g d'oxyde alumino-silicate (Si₂O₅.Al₂O₂) dans lequel le cation Al est en coordination (IV-V) comme déterminé par le spectre MAS-NMR pour ²⁷Al, et 45 g de fluosilicate de sodium en poudre Na₂SiF₆.

La résine géopolymère ainsi obtenue a une viscosité de 450 mPa.s; elle est coulée dans un moule que l'on porte à l'étuve à 60°C. Le durcissement s'effectue en 3 heures. On démoule et laisse sécher à 60°C. La densité du géopolymère est d= 1,70g/ml.

### Exemple 4)

Avec la silice thermique, la potasse KOH, on réalise une solution de silicate de potasse de rapport molaire K2O:SiO2=1 et de concentration 50% de matières solides SiO₂+K₂O. Cette solution est stable dans le temps et peut donc être conservée.

### Exemple 5)

A la solution de l'exemple 4) on ajoute
- la silice thermique
- l'oxyde (Si₂O₅.Al₂O₂) dans lequel le cation Al est en coordination (IV-V) comme déterminé par le spectre MAS-NMR pour ²⁷Al,
- le fluosilicate de sodium Na₂SiF₆ en poudre
en quantité telle que, dans le mélange réactionnel, les rapports molaires soient:

| | |
|---|---|
| Al₂O₃:M₂O | 1:2,44 |
| Al₂O₃:SiO₂ | 1:9,37 |
| M₂O:H₂O | 1:6,35 |
| Al₂O₃:F⁻ | 1:5,94 |

la teneur en eau est de 17,5% en poids, la viscosité initiale de la résine géopolymère de 400 mPa.s.

Puis on laisse maturer la dite résine géopolymère pour permettre la dissolution de la dite silice thermique, la viscosité diminuant alors jusqu'à un minimum de 250-300 mPa.s, puis elle augmente lorsque l'on se trouve dans le début de la phase de géopolymérisation qui est la phase d'utilisation de la résine géopolymère. Le "pot-life" est de 48 heures à 20°C.

La résine est coulée dans un moule que l'on porte à l'étuve à 60°C. Le durcissement s'effectue en 3 heures. On démoule et séche à 60°C. La densité du géopolymère est d= 1,70 g/ml.

On étudie la courbe dilatation retrait du matériau. Le premier retrait de déshydratation est de l'ordre de 2%, sans aucune addition de charge. Aucune fissuration n'apparait dans le matériau lorsqu'il est porté jusqu'à 600°C. Après la première déshydroxylation, la courbe de retrait montre le crochet caractéristique de la cristobalite à 210°C. Le coefficient de dilatation thermique linéaire est Δλ=15.10⁻⁶/°C.

Le composé géopolymèrique est du type moyennement cristobalitique et se compose de:

| | |
|---|---|
| (K,Na)-PSDS | 40% |
| phase siliceuse SiO₂,H₂O | 35% |
| Elpasolite | 12% |
| eau | qsp 100% |

### Exemple 6)

A la solution de l'exemple 4) on ajoute
- la silice thermique
- le fluosilicate de sodium Na₂SiF₆ en poudre
en quantité telle que, dans le mélange réactionnel, les rapports molaires soient:

| | |
|---|---|
| Al₂O₃:M₂O | 1:20 |
| Al₂O₃:SiO₂ | 1:73 |
| M₂O:H₂O | 1:6,78 |
| Al₂O₃:F⁻ | 1:48 |

la teneur en eau est de 26,5% en poids et la viscosité initiale de la résine géopolymère est de 350 mPa.s.

Puis on laisse maturer la dite résine géopolymère pour permettre la dissolution de la dite silice thermique, la viscosité diminuant alors jusqu'à un minimum de 250 mPa.s, puis elle augmente lorsque l'on se trouve dans le début de la phase de géopolymérisation qui est la phase d'utilisation de la résine géopolymère. Le "pot-life" est de 48 heures à 20°C.

La résine est coulée dans un moule que l'on porte à l'étuve à 60°C. Le durcissement s'effectue en 4 heures. On démoule et laisse sécher à 60°C. La densité du géopolymère est d= 1,85 g/ml.

On étudie la courbe dilatation retrait du matériau. Le premier retrait de déshydratation est de l'ordre de 1,8%, sans aucune addition de charge. Aucune fissuration n'apparait dans le matériau lorsqu'il est porté jusqu'à 600°C. Après la première déshydroxylation, la courbe de retrait montre le crochet caractéristique de la cristobalite à 210°C. Le coefficient de dilatation thermique linéaire est Δλ=30.10⁻⁶/°C.

Le composé géopolymèrique est du type fortement cristobalitique et se compose de:

| | |
|---|---|
| (K,Na)-PSDS | 3,56% |
| phase siliceuse SiO₂,H₂O | 78% |
| Elpasolite | 3,5% |
| eau | qsp 100% |

### Exemple 7)

A la solution de l'exemple 4) on ajoute
- la silice thermique
- l'oxyde (Si₂O₅.Al₂O₂) dans lequel le cation Al est en coordination (IV-V) comme déterminé par le spectre MAS-NMR pour ²⁷Al,
- le fluosilicate de sodium Na₂SiF₆ en poudre
en quantité telle que, dans le mélange réactionnel, les rapports molaires soient:

| | |
|---|---|
| Al₂O₃:M₂O | 1:1,71 |
| Al₂O₃:SiO₂ | 1:6,28 |
| M₂O:H₂O | 1:11 |
| Al₂O₃:F⁻ | 1:1,55 |

la teneur en eau est de 23,5% en poids et la viscosité initiale de la résine géopolymère est de 480 mPa.s.

Puis on laisse maturer la dite résine géopolymère pour permettre la dissolution de la dite silice thermique, la viscosité diminuant alors jusqu'à un minimum de 300 mPa.s, puis elle augmente lorsque l'on se trouve dans le début de la phase de géopolymérisation qui est la phase d'utilisation de la résine géopolymère. Le "pot-life" est de 48 heures à 20°C.

La résine est coulée dans un moule que l'on porte à l'étuve à 60°C. Le durcissement s'effectue en 3 heures. On démoule et laisse sécher à 60°C. La densité du géopolymère est d= 1,60 g/ml.

On étudie la courbe dilatation retrait du matériau. Le premier retrait de déshydratation est de l'ordre de 2,7%, sans aucune addition de charge. Aucune fissuration n'apparait dans le matériau lorsqu'il est porté jusqu'à 600°C. Après la première déshydroxylation, la courbe de retrait montre un faible crochet caractéristique de la cristobalite à 210°C. Le coefficient de dilatation thermique linéaire est Δλ=7.10⁻⁶/°C.

Le composé géopolymèrique est du type faiblement cristobalitique et se compose de:

| | |
|---|---|
| (K,Na)-PSDS | 79% |
| phase siliceuse SiO₂,H₂O | 11% |
| Elpasolite | 6,5% |
| eau | qsp 100% |

L'homme de l'art comprendra l'intérét d'avoir a sa disposition un géopolymère beaucoup plus stable en température sans avoir la formation de fissuration, si l'on se réfère aux géopolymères réalisés dans l'art antérieur. Le fait de ne pas être obligé d'ajouter des charges pour empêcher la fissuration de la matrice géopolymèrique, permet de conserver une viscosité très basse à la résine géopolymèrique, ce qui est un avantage certain lorsqu'il s'agira d'imprégner des fibres, ou aussi d'autres matières granuleuses. L'absence de retrait de déshydratation et de déshydroxylation jusqu'à 600°C pour les matériaux réalisés avec ce liant, présente un avantage certain. Il permet notamment d'avoir une identité presque parfaite entre le comportement dilatométrique des charges et renforts fibreux et la matrice géopolymèrique. On peut exactement choisir un coefficient de dilatation linéaire pour le composé géopolymèrique. La plage pour Δλ varie de 5.10⁻⁶/°C à 35.10⁻⁶/°C, c'est à dire qu'elle s'adapte parfaitement aux matériaux à faible dilatation comme la silice vitreuse, la fibre de carbone ou la fibre de SiC, jusqu'aux métaux de forte dilatation, en passant par le verre et les matériaux céramiques.

En particulier le liant géopolymère selon l'invention permet de réaliser des revêtements dont le comportement dilatomètrique, à la température, est identique à celui de la couche inférieure.
Bien entendu, diverses modifications peuvent être apportées par l'homme de l'art au procédé qui vient d'être décrit uniquement à titre d'exemple, sans sortir du cadre de l'invention.

## Revendications

1. (modifiée) Géopolymère fluoro-alumino-silicate dont la composition à l'état déshydraté, exprimée en terme d'oxyde est:
yM₂O:Al₂O₃:xSiO₂, wF²⁻
"x" est une valeur comprise entre 5,5 et 75, "y" est une valeur comprise entre 1 et 20, "w" est une valeur comprise entre 0,5 et 50, caractérisé en ce que, après durcissement, le dit géopolymère est constitué d'un composé géopolymèrique comprenant
a) un géopolymère de type poly(sialate-disiloxo) fluoro-alcalin (M,F)-PSDS de formule 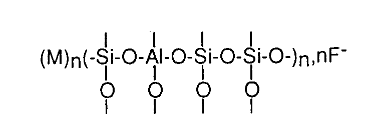
b) un alumino-fluorure alcalin M₃AlF₆
c) une phase siliceuse SiO₂,H₂O, de type Opal CT
dans lequel M désigne un alcalin Na et/ou K, n est le degré de polymérisation, le dit géopolymère poly(sialate-disiloxo) fluoro-alcalin ayant un cation Al en coordination (IV), de type Al(Q₄) comme déterminé par le spectre d'analyse MAS-NMR pour ²⁷Al, la dite phase siliceuse SiO₂,H₂O possédant une courbe dilatomètrique caractéristique de SiO₂ en phase cristobalite, le dit alumino-fluorure alcalin étant déterminé par son spectre de diffraction aux Rayons X.

2. Composé géopolymèrique selon 1), caractérisé en ce que lorsque M est le cation Na, le dit alumino-fluorure alcalin est la cryolite Na₃AlF₆.

3. Composé géopolymèrique selon 1), caractérisé en ce que lorsque M est constitué d'un mélange de cation K et de cation Na, le dit alumino-fluorure alcalin est l'elpasolite de formule K₂NaAlF₆.

4. (modifiée) Composé géopolymèrique selon la revendication 3), caractérisé en ce qu'il comprend:
- 10 à 95 parties en poids de phase siliceuse SiO₂,H₂O, de type OPAL CT
- 2 à 90 parties en poids de poly(sialate-disiloxo) fluoro-alcalin (K,Na,F)-PSDS de formule 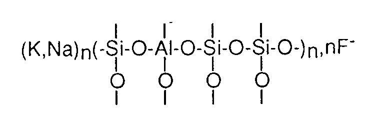
- 2 à 15 parties en poids d'elpasolite de formule K₂NaAlF₆.

5. (modifiée) Composé géopolymèrique selon la revendication 3), caractérisé en ce qu'il comprend:
- 10 à 25 parties en poids de phase siliceuse SiO₂,H₂O de type Opal CT
- 90 à 75 parties en poids de poly(sialate-disiloxo) fluoro-alcalin (K,Na,F)-PSDS de formule 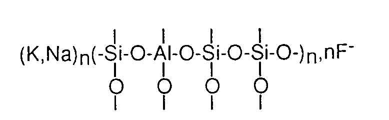
- 2 à 15 parties en poids d'elpasolite de formule K₂NaAlF₆;
le dit composé géopolymèrique ayant un coefficient de dilatation thermique Δλ<10.10⁻⁶/°C

6. (modifiée) Composé géopolymèrique selon la revendication 3), caractérisé en ce qu'il comprend:
- 26 à 75 parties en poids de phase siliceuse SiO₂,H₂O, de type Opal CT
- 74 à 25 parties en de poids de poly(sialate-disiloxo) fluoro-alcalin (K,Na,F)-PSDS de formule 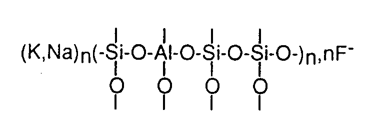
- 2 à 15 parties en poids d'elpasolite de formule K₂NaAlF₆;
le dit composé géopolymèrique ayant un coefficient de dilatation thermique 10.10⁻6<Δλ<20.10⁻⁶/°C.

7. (modifiée) Composé géopolymèrique selon la revendication 3), caractérisé en ce qu'il comprend:
- 76 à 95 parties en poids de phase siliceuse SiO₂,H₂O, de type Opal CT
- 24 à 2 parties en poids de poly(sialate-disiloxo) fluoro-alcalin (K,Na,F)-PSDS de formule 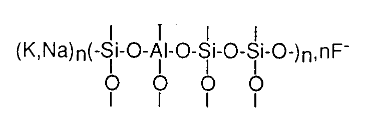
- 2 à 15 parties en poids d'elpasolite de formule K₂NaAlF₆;
le dit composé géopolymèrique ayant un coefficient de dilatation thermique Δλ>20.10⁻⁶/°C.

8. (modifiée) Procédé de préparation d'un géopolymère selon l'une quelconque des revendications 1) à 7), caractérisé en ce qu'il consiste à faire réagir une résine géopolymère obtenue à partir d'un mélange réactionnel contenant:
a) une solution alcaline de fumée de silice thermique ayant un rapport molaire M₂O:SiO₂ compris entre ou égal à:
| | |
|---|---|
| M₂O:SiO₂ | 1:4,0 et 1:6,5 |
dont la concentration est supérieure à 60% en poids et dont la viscosité initiale à 20°C est inférieure à 200 mPa.s, puis augmente pour ne pas dépasser 500 mPa.s avant 5 heures à 20°C;
b) un oxyde alumino-silicate (Si₂O₅,Al₂O₂) dans lequel le cation Al est en coordination (IV-V) comme déterminé par le spectre MAS-NMR pour ²⁷Al,
c) un fluosilicate de sodium Na₂SiF₆
Dans le mélange des constituants a)+b)+c) dont la teneur en eau est inférieure à 30% en poids, la viscosité initiale de la résine géopolymère est de 350-500 mPa.s, et le rapport molaire des oxydes compris entre ou égal à:
| | |
|---|---|
| Al₂O₃:M₂O | 1:1,0 et 1:20 |
| Al₂O₃:SiO₂ | 1:5,5 et 1:75 |
| M₂O:H₂O | 1:5,0 et 1:12,0 |
| Al₂O₃:F⁻ | 1:0,5 et 1:50 |
puis à laisser durcir la dite résine géopolymère.

9. (modifiée) Procédé de préparation d'un géopolymère selon l'une quelconque des revendications 1) à 7), caractérisé en ce pour obtenir la dite résine géopolymère on prépare séparément:
a) une solution aqueuse de silicate de potasse de rapport molaire
| | |
|---|---|
| K₂O:SiO₂ | 1:1 |
concentrée à 50%;
b) une poudre contenant de l'oxyde alumino-silicate (Si₂O₅.Al₂O₂) dans lequel le cation Al est en coordination (IV-V) comme déterminé par le spectre MAS-NMR pour ²⁷Al, un fluosilicate de sodium Na₂SiF₆ et de la fumée de silice thermique (15SiO₂,AlO₂);
Dans le mélange des constituants a) et b) dont la teneur en eau est inférieure à 30% en poids, la viscosité initiale de la résine géopolymère est de 350-500 mPa.s, et le rapport molaire des oxydes compris entre ou égal à:
| | |
|---|---|
| Al₂O₃:M₂O | 1:1,0 et 1:20 |
| Al₂O₃:SiO₂ | 1:5,5 et 1:75 |
| M₂O:H₂O | 1:5,0 et 1:12,0 |
| Al₂O₃:F⁻ | 1:0,5 et 1:50 |
Puis on laisse maturer la dite résine géopolymère pour permettre la dissolution de la dite silice thermique, la viscosité diminuant alors jusqu'à un minimum de 250-300 mPa.s, puis elle augmente lorsque l'on se trouve dans le début de la phase de géopolymérisation qui est la phase d'utilisation de la résine géopolymère.

10. (modifiée) Procédé de préparation d'un géopolymère selon la revendication 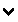 5) et la revendication 9), caractérisé en ce pour obtenir la dite résine géopolymère on prépare séparément:
a) une solution aqueuse de silicate de potasse de rapport molaire
| | |
|---|---|
| K₂O:SiO₂ | 1:1 |
concentrée à 50%;
b) une poudre contenant de l'oxyde alumino-silicate (Si₂O₅.Al₂O₂) dans lequel le cation Al est en coordination (IV-V) comme déterminé par le spectre MAS-NMR pour ²⁷Al, un fluosilicate de sodium Na₂SiF₆ et de la fumée de silice thermique (15SiO₂,AlO₂);
Dans le mélange des constituants a) et b) dont la teneur en eau est inférieure à 30% en poids, la viscosité initiale de la résine géopolymère est de 350-500 mPa.s, et le rapport molaire des oxydes compris entre ou égal à:
| | |
|---|---|
| Al₂O₃:M₂O | 1:1,0 et 1:1,6 |
| Al₂O₃:SiO₂ | 1:5,5 et 1:6,6 |
| M₂O:H₂O | 1:11 |
| Al₂O₃:F⁻ | 1:1 et 1:3 |
Puis on laisse maturer la dite résine géopolymère pour permettre la dissolution de la dite silice thermique, la viscosité diminuant alors jusqu'à un minimum de 250-300 mPa.s, puis elle augmente lorsque l'on se trouve dans le début de la phase de géopolymèrisation qui est la phase d'utilisation de la résine géopolymère.

11. (modifiée) Procédé de préparation d'un géopolymère selon la revendication 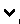 6) et la revendication 9), caractérisé en ce pour obtenir la dite résine géopolymère on prépare séparément:
a) une solution aqueuse de silicate de potasse de rapport molaire
| | |
|---|---|
| K₂O:SiO₂ | 1:1 |
concentrée à 50%;
b) une poudre contenant de l'oxyde alumino-silicate (Si₂O₅.Al₂O₂) dans lequel le cation Al est en coordination (IV-V) comme déterminé par le spectre MAS-NMR pour ²⁷Al, un fluosilicate de sodium Na₂SiF₆ et de la fumée de silice thermique (15SiO₂,AlO₂);
Dans le mélange des constituants a) et b) dont la teneur en eau est inférieure à 30% en poids, la viscosité initiale de la résine géopolymère est de 350-500 mPa.s, et le rapport molaire des oxydes compris entre ou égal à:
| | |
|---|---|
| Al₂O₃:M₂O | 1:1,65 et 1:3,0 |
| Al₂O₃:SiO₂ | 1:6,65 et 1:10,95 |
| M₂O:H₂O | 1:6,35 |
| Al₂O₃:F⁻ | 1:3,10 et 1:7,95 |
Puis on laisse maturer la dite résine géopolymère pour permettre la dissolution de la dite silice thermique, la viscosité diminuant alors jusqu'à un minimum de 250-300 mPa.s, puis elle augmente lorsque l'on se trouve dans le début de la phase de géopolymérisation qui est la phase d'utilisation de la résine géopolymère.

12. (modifiée) Procédé de préparation d'un géopolymère selon la revendication 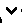 7) et la revendication 9), caractérisé en ce pour obtenir la dite résine géopolymère on prépare séparément:
a) une solution aqueuse de silicate de potasse de rapport molaire
| | |
|---|---|
| K₂O:SiO2 | 1:1 |
concentrée à 50%;
b) une poudre contenant de l'oxyde alumino-silicate (Si₂O₅.Al₂O₂) dans lequel le cation Al est en coordination (IV-V) comme déterminé par le spectre MAS-NMR pour ²⁷Al, un fluosilicate de sodium Na2SiF6 et de la fumée de silice thermique (15SiO₂,AlO₂);
Dans le mélange des constituants a) et b) dont la teneur en eau est inférieure à 30% en poids, la viscosité initiale de la résine géopolymère est de 350-500 mPa.s, et le rapport molaire des oxydes compris entre ou égal à:
| | |
|---|---|
| Al₂O₃:M₂O | 1:3,1 et 1:20 |
| Al₂O₃:SiO₂ | 1:11 et 1:73 |
| M₂O:H₂O | 1:6,78 |
| Al₂O₃:F⁻ | 1:8,0 et 1:48 |
Puis on laisse maturer la dite résine géopolymère pour permettre la dissolution de la dite silice thermique, la viscosité diminuant alors jusqu'à un minimum de 250-300 mPa.s, puis elle augmente lorsque l'on se trouve dans le début de la phase de géopolymérisation qui est la phase d'utilisation de la résine géopolymère.

13. (modifiée) Objet de toute forme et de toute dimension résultant du durcissement du géopolymère obtenue selon l'une quelconque des revendications 8) à 12), soit par agglomération de charges minérales, métalliques et/ou organiques, soit par imprégnation de fibres, tissus, non-tissés ou feutres..

14. Revêtement de surface contenant un composé géopolymèrique selon l'une quelconque des revendications 1) à 7)

## Claims

1. A fluoro-alumino-silicate geopolymer whose composition expressed in terms of oxides and in fully dehydrated form is:
yM₂O:Al₂O₃:xSiO₂:wF²⁻
"x" has a value comprised between 5.5 and 75, "y" has a value comprised between 1.0 and 20, "w" has a value comprised between 0.5 and 50, wherein after curing, the said geopolymer consists of a geopolymeric compound comprising:
a) a geopolymer of the fluro-alkaline poly(sialate-disiloxo) type (M,F)-PSDS of formula 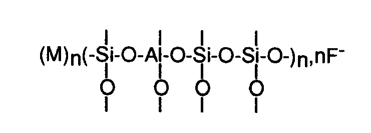
b) an alkaline-alumino-fluoride M₃AlF₆ such as elpasolite K₂NaAlF₆;
c) a silicious phase SiO₂,H₂O of the Opal CT type;
where "M" represents the cations Na and/or K, "n" the degree of polymerisation, the said alkali-fluoro poly(sialate-disiloxo) geopolymer having the Al cation in IV-fold coordination, of type Al₄(Q4) as determined by MAS-NMR spectroscopy for ²⁷Al, the said silicous phase of the Opal CT type having a dilatometric pattern characteristic of cristobalite SiO₂, and the said alkali-alumino-fluoride being characterised through its X-ray diffraction pattern.

2. A Geopolymeric compound according to claim 1), wherein "M" is Na and the said alkaline alumino-fluoride is cryolite Na₃AlF₆.

3. A Geopolymeric compound according to claim 1), wherein "M" is a mixture of Na and K and the said alkaline alumino-fluoride is elpasolite K₂NaAlF₆.

4. A Geopolymeric compound according to claim 3, comprising:
- 10 to 95 parts by weight of silicious phase SiO₂,H₂O of type Opal CT,
- 2 to 90 parts by weight of alkaline fluoro poly(sialate-disiloxo) (K,Na,F)-PSDS 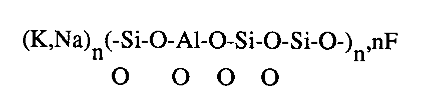
- 2 to 15 parts by weight of elpasolite K₂NaAlF₆

5. A Geopolymeric compound according to claim 3, comprising:
- 10 to 25 parts by weight of silicious phase SiO₂ of type Opal CT,
- 90 to 75 parts by weight of alkaline fluoro poly(sialate-disiloxo) (K,Na,F)-PSDS 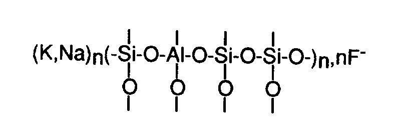
- 2 to 15 parts by weight of elpasolite K₂NaAlF₆
The said geopolymeric compound has a thermal expansion coefficient Dl<10.10⁻⁶/°C

6. A Geopolymeric compound according to claim 3, comprising:
- 26 to 75 parts by weight of silicious phase SiO₂ of type Opal CT,
- 74 to 25 parts by weight of alkaline fluoro poly(sialate-disiloxo) (K,Na,F)-PSDS 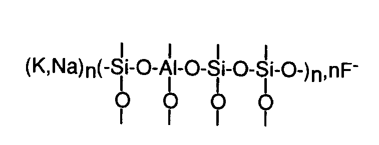
- 2 to 15 parts by weight of elpasolite K₂NaAlF₆
The said geopolymeric compound has a thermal expansion coefficient
10.10⁻⁶/°C<Dl<20.10⁻⁶/°C

7. A Geopolymeric compound according to claim 3, comprising:
- 76 to 95 parts by weight of silicious phase SiO₂ of type Opal CT,
- 24 to 2 parts by weight of alkaline fluoro poly(sialate-disiloxo) (K,Na,F)-PSDS 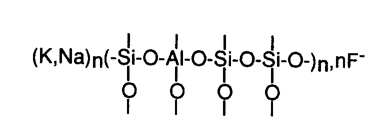
- 2 to 15 parts by weight of elpasolite K₂NaAlF₆
The said geopolymeric compound has a thermal expansion coefficient Dl>20.10⁻⁶/°C

8. A method for obtaining a geopolymer according to any one of claims 1 to 7 which consists of reacting a geopolymeric resin obtained from a reactional mixture containing:
a) an alkaline solution of thermal silica fume with a molar ratio SiO₂:M₂O comprised between or equal to
| | |
|---|---|
| SiO₂:M₂O | 4.0:1 and 6.6:1 |
the concentration of which is over 60% wt and where the initial viscosity at 20⁻C is 0,2 Pa.s, then increases but does not exceed 0,5 Pa.s before 5 hours at 20⁻C;
b) an alumino-silicate oxide (Si₂O₅,Al₂O₂) in which the Al cation is in coordination (IV-V), as determined by the MAS-NMR spectrum for ²⁷Al,
c) sodium fluosilicate Na₂SiF₆.
wherein the mixture a)+b)+c) has a water content lower than 30% wt and leads to a geopolymeric resin whose starting viscosity is in the 350-500 mPa.s, with oxide molar ratios comprised between or equal to
| | |
|---|---|
| Al₂O₃:M₂O | 1:1.0 and 1:20 |
| Al₂O₃:SiO₂ | 1:5.5 and 1:75 |
| M₂O:H₂O | 1:5.0 and 1:12.0 |
| Al₂O₃:F- | 1:0.5 and 1:50 |
and then allowing the said geopolymeric resin to cure.

9. A method for obtaining a geopolymer according to any one of claims 1 to 7 wherein the geopolymeric resin is produced after having prepared separately:
a) an aqueous potassium silicate solution with a molar ratio
| | |
|---|---|
| K₂O:SiO₂ | 1:1 |
with a 50% concentration;
b) a powder comprising the alumino-silicate oxide (Si₂O₅,Al₂O₂) with the Al cation in (IV-V)-fold coordination as determined by MAS-NMR spectroscopy for ²⁷Al, sodium fluosilicate Na₂SiF₆ and thermal fume silica (15Si₂O₅,Al₂O₂);
The geopolymeric resin resulting from the mixture of a) + b) has a water content lower than 30% by weight, the initial viscosity being in the 350-500 mPa.s range and the oxide molar ratios comprised between or equal to:
| | |
|---|---|
| Al₂O₃:M₂O | 1:1.0 and 1:20 |
| Al₂O₃:SiO₂ | 1:5.5 and 1:75 |
| M₂O:H₂O | 1:5.0 and 1:12.0 |
| Al₂O₃:F⁻ | 1:0.5 and 1:50 |
Maturation of the said geopolymeric resin dissolves the said thermal silica; during the first step the viscosity decreases to reach a minimum at 250-300 mPa.s, then it increases at the beginning of the geopolymerization step, the latter representing the utilisation phase for the geopolymer.

10. A method for obtaining a geopolymer according to claims 5 and 9, wherein the geopolymeric resin is produced after having prepared separately:
a) an aqueous potassium silicate solution with a molar ratio
| | |
|---|---|
| K₂O:SiO₂ | 1:1 |
with a 50% concentration;
b) a powder comprising the alumino-silicate oxide (Si₂O₅,Al₂O₂) with the Al cation in (IV-V)-fold coordination as determined by MAS-NMR spectroscopy for ²⁷Al, sodium fluosilicate Na₂SiF₆ and thermal fume silica (15Si₂O₅,Al₂O₂);
The geopolymeric resin resulting from the mixture of a) + b) has a water content lower than 30% by weight, the initial viscosity being in the 350-500 centipoise range and the oxide molar ratios comprised between or equal to:
| | |
|---|---|
| Al₂O₃:M₂O | 1:1.0 and 1:1.6 |
| Al₂O₃:SiO₂ | 1:5.5 and 1:6.6 |
| M₂O:H₂O | 1:11.0 |
| Al₂O₃:F⁻ | 1:1 and 1:3 |
Maturation of the said geopolymeric resin dissolves the said thermal silica; during the first step the viscosity decreases to reach a minimum at 250-300 mPa.s, then it increases at the beginning of the geopolymerization step, the latter representing the utilisation phase for the geopolymer.

11. A method for obtaining a geopolymer according to claims 6 and 9, wherein the geopolymeric resin is produced after having prepared separately:
a) an aqueous potassium silicate solution with a molar ratio
| | |
|---|---|
| K₂O:SiO₂ | 1:1 |
with a 50% concentration;
b) a powder comprising the alumino-silicate oxide (Si₂O₅,Al₂O₂) with the Al cation in (IV-V)-fold coordination as determined by MAS-NMR spectroscopy for ²⁷Al, sodium fluosilicate Na₂SiF₆ and thermal fume silica (15Si₂O₅,Al₂O₂);
The geopolymeric resin resulting from the mixture of a) + b) has a water content lower than 30% by weight, the initial viscosity being in the 350-500 centipoise range and the oxide molar ratios comprised between or equal to:
| | |
|---|---|
| Al₂O₃:M₂O | 1:1.65 and 1:3.0 |
| Al₂O₃:SiO₂ | 1:6.65 and 1:10.95 |
| M₂O:H₂O | 1:6.35 |
| Al₂O₃:F⁻ | 1:3.10 and 1:7.95 |
Maturation of the said geopolymeric resin dissolves the said thermal silica; during the first step the viscosity decreases to reach a minimum at 250-300 mPa.s, then it increases at the beginning of the geopolymerization step, the latter representing the utilisation phase for the geopolymer.

12. A method for obtaining a geopolymer according to claims 7 and 9, wherein the geopolymeric resin is produced after having prepared separately:
a) an aqueous potassium silicate solution with a molar ratio
| | |
|---|---|
| K₂O:SiO₂ | 1:1 |
with a 50% concentration;
b) a powder comprising the alumino-silicate oxide (Si₂O₅,Al₂O₂) with the Al cation in (IV-V)-fold coordination as determined by MAS-NMR spectroscopy for ²⁷Al, sodium fluosilicate Na₂SiF₆ and thermal fume silica (15Si₂O₅,Al₂O₂);
The geopolymeric resin resulting from the mixture of a) + b) has a water content lower than 30% by weight, the initial viscosity being in the 350-500 centipoise range and the oxide molar ratios comprised between or equal to:
| | |
|---|---|
| Al₂O₃:M₂O | 1:3.1 and 1:20 |
| Al₂O₃:SiO₂ | 1:11 and 1:73 |
| M₂O:H₂O | 1:6.78 |
| Al₂O₃:F⁻ | 1:8.0 and 1:48 |
Maturation of the said geopolymeric resin dissolves the said thermal silica; during the first step the viscosity decreases to reach a minimum at 250-300 mPa.s, then it increases at the beginning of the geopolymerization step, the latter representing the utilisation phase for the geopolymer.

13. Items in any shape and dimension produced by hardening a geopolymer resin according to any one of claims 8 to 12, involving the agglomeration of mineral-, metallic and/or organic fillers, the impregnation of fibers, non-wovens, felts or fabrics.

14. Surface layers containing one geopolymeric compound according to any one of claims 1 to 7.

## Patentansprüche

1. Fluoro-aluminiumsilikat Geopolymer dessen Zusammensetzung in dehydratiertem Zustand in Oxid ausgedrückt ist wie folgt:
yM₂O:Al₂O₃:xSiO₂:wF²⁻
wobei *x* einen Wert darstellt, der zwischen 5,5 und 75 liegt, *y* einen Wert darstellt der zwischen 1 und 20 liegt, *w* einen Wert darstellt, der zwischen 0,5 und 50 liegt, dadurch gekennzeichnet, dass nach Erhärten, besagtes Geopolymer aus einer geopolymerischen Verbindung besteht die:
a) ein Geopolymer vom Typus des Fluoro-alkali-poly(sialat-disiloxo) (M,F)-PSDS mit der Formel 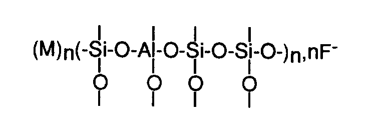 ;
b) ein alkalisches Aluluminiumfluorid M₃AlF₆;
c) eine Siliciumphase SiO₂,H₂O vom Typus Opal CT; enthält
in welchem *M* das Alkali Na und/oder K darstellt, *n* den Polymerisationsgrad darstellt, das besagte Fluoro-alkali-poly(sialat-disiloxo) Geopolymer ein Kation Al in vierer Koordination vom Typus Al₄(Q4) wie es das ²⁷Al MAS-NMR Analysenspektrum zeigt, besagte Siliciumphase SiO₂,H₂O eine charakteristische dilatometrische Kurve des SiO₂ in Cristobalit-Phase besitzt, besagtes alkalisches Aluminiumfluorid durch sein Röntgen-Diffraktionsspektrum bestimmt ist.

2. Geopolymerische Verbindung nach Anspruch 1), dadurch gekennzeichnet, dass wenn *M* das Kation Na ist, besagtes alkalisches Aluminiumfluorid das Cryolit Na₃AlF₆ darstellt.

3. Geopolymerische Verbindung nach Anspruch 1), dadurch gekennzeichnet, dass wenn *M* aus einer Mischung des Kations K und des Kations Na besteht, besagtes alkalisches Aluminiumfluorid das Elpasolit mit der Formel K₂NaAlF₆ darstellt.

4. Geopolymerische Verbindung nach Anspruch 3), dadurch gekennzeichnet, dass sie:
- 10 bis 95 Gewichtsteile der Siliciumphase SiO₂,H₂O vom Typus Opal CT,
- 2 bis 90 Gewichtsteile des alkalischen Fluoro-poly(sialat-disiloxo) (K,Na,F)-PSDS mit der Formel 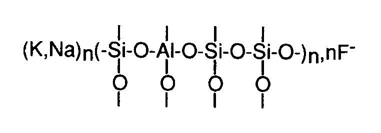
- 2 bis 15 Gewichtsteile Elpasolit mit der Formel K₂NaAlF₆, enthält.

5. Geopolymerische Verbindung nach Anspruch 3), dadurch gekennzeichnet, dass sie:
- 10 bis 25 Gewichtsteile der Siliciumphase SiO₂,H₂O vom Typus Opal CT,
- 90 bis 75 Gewichtsteile des alkalischen Fluoro-poly(sialat-disiloxo) (K,Na,F)-PSDS mit der Formel 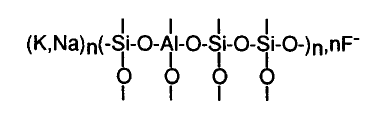
- 2 bis 15 Gewichtsteile Elpasolit mit der Formel K₂NaAlF₆, enthält;
besagte geopolymerische Verbindung einen thermischen Ausdehnungskoeffizienten hat von Δl>10.10⁻⁶/°C hat.

6. Geopolymerische Verbindung nach Anspruch 3), dadurch gekennzeichnet, dass sie:
- 26 bis 75 Gewichtsteile der Siliciumphase SiO₂,H₂O vom Typus Opal CT,
- 74 bis 25 Gewichtsteile des alkalischen Fluoro-poly(sialat-disiloxo) (K,Na,F)-PSDS mit der Formel 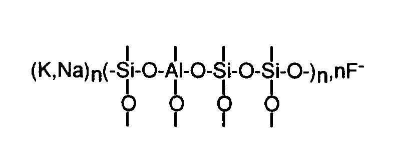
- 2 bis 15 Gewichtsteile Elpasolit mit der Formel K₂NaAlF₆, enthält;
besagte geopolymerische Verbindung einen thermischen Ausdehnungskoeffizienten hat von 10.10⁻⁶/°C<Δl<20.10⁻⁶/°C hat.

7. Geopolymerische Verbindung nach Anspruch 3), dadurch gekennzeichnet, dass sie:
- 76 bis 95 Gewichtsteile der Siliciumphase SiO₂,H₂O vom Typus Opal CT,
- 24 bis 2 Gewichtsteile des alkalischen Fluoro-poly(sialat-disiloxo) (K,Na,F)-PSDS mit der Formel 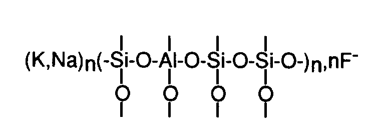
- 2 bis 15 Gewichtsteile Elpasolit mit der Formel K₂NaAlF₆, enthält;
besagte geopolymerische Verbindung einen thermischen Ausdehnungskoeffizienten hat von Δl>20.10⁻⁶/°C hat.

8. Verfahren zur Herstellung eines Geopolymeres nach irgend einem der Ansprüche 1) bis 7) dadurch gekennzeichnet, dass man ein geopolymerisches Harz reagieren lässt, das aus folgender Reaktionsmischung erhalten wurde:
a) eine alkalische Losung von thermischem Silicafume mit dem Molarvehältnis SiO₂:M₂O zwischen oder gleich
| | |
|---|---|
| SiO₂:M₂O | 4.0:1 und 6.6:1 |
deren Konzentration höher als 60 Gewichtprozentanteil ist und deren Anfangsviskosität bei 20°C 0,2 Pa.s beträgt, dann in die Höhe geht, aber nicht 0,5 Pa.s innerhalb 5 Stunden bei 20°C übersteigt;
b) ein Aluminosilikatoxid (Si₂O₅,Al₂O₂), in welchem sich das Kation Al sich in IV-V Koordination befindet, wie durch das ²⁷Al MAS-NMR Spektrum gezeigt wird,
c) Natrium Fluosilikat Na₂SiF₆.
wobei in der Mischung der Bestandteile a)+b+c) der Wassergehalt unter 30 Gewichtsprozenten liegt, die Anfangsviskosität des geopolymeren Harzes bei 350-500 mPa.s liegt und das Molarverhältnis der Oxide zwischen oder gleich
| | |
|---|---|
| Al₂O₃:M₂O | 1:1.0 and 1:20 |
| Al₂O₃:SiO₂ | 1:5.5 and 1:75 |
| M₂O:H₂O | 1:5.0 and 1:12.0 |
| Al₂O₃:F- | 1:0.5 and 1:50 |
ist, dann lässt man das besagte geopolymere Harz erhärten.

9. Verfahren zur Bereitung eines Geopolymers nach irgeneiner der Ansprüche 1) bis 7) dadurch gekennzeichnet, dass, um besagtes geopolymeres Harz zu erhalten, man getrennt zubereitet:
a) eine wässerige Losung von Kaliumsilikat mit dem Molarverhältnis
| | |
|---|---|
| K₂O:SiO₂ | 1:1 |
in einer Konzentration von 50%,
b) ein Pulver, aus einem Aluminosilikatoxid (Si₂O₅,Al₂O₂) in welchem das Kation Al sich in IV-V Koordination befindet wie durch das ²⁷Al MAS-NMR Spektrum gezeigt wird, einem Natriumfluorosilikat Na₂SiF₆ und einem thermisches Silicafume (15Si₂O₅,Al₂O₂) besteht;
das geopolymerische Harz, das aus der Mischung des Bestandteile a)+b) hervorgeht, wobei der Wassergehalt unter 30 Gewichtsprozenten liegt, die Anfangsviskosität des geopolymeren Harzes bei 350-500 mPa.s liegt und das Molarverhältnis der Oxide zwischen oder gleich ist
| | |
|---|---|
| Al₂O₃:M₂O | 1:1.0 and 1:20 |
| Al₂O₃:SiO₂ | 1:5.5 and 1:75 |
| M₂O:H₂O | 1:5.0 and 1:12.0 |
| Al₂O₃:F- | 1:0.5 and 1:50 |
dann lässt man das besagte geopolymere Harz reifen, um die Auflösung besagten thermischen Silicafumes zu erlauben, die Viskosität nimmt dann ab bis zu einem Minium von 250-300 mPa.s; bei Beginn der Geopolymerisationsphase nimmt sie wieder zu; dies stellt die Phase dar bei der das geopolymere Harz gebrauchsbereit ist.

10. Verfahren zur Bereitung eines Geopolymers nach den Ansprüchen 5) und 9) dadurch gekennzeichnet, dass, um besagtes geopolymeres Harz zu erhalten, man getrennt zubereitet:
a) eine wässerige Losung von Kaliumsilikat mit dem Molarverhältnis
| | |
|---|---|
| K₂O:SiO₂ | 1:1 |
in einer Konzentration von 50%,
b) ein Pulver, aus einem Aluminosilikatoxid (Si₂O₅,Al₂O₂) in welchem das Kation Al sich in IV-V Koordination befindet wie durch das ²⁷Al MAS-NMR Spektrum gezeigt wird, einem Natriumfluorosilikat Na₂SiF₆ und einem thermisches Silicafume (15Si₂O₅,Al₂O₂) besteht;
das geopolymerische Harz, das aus der Mischung des Bestandteile a)+b) hervorgeht, wobei der Wassergehalt unter 30 Gewichtsprozenten liegt, die Anfangsviskosität des geopolymeren Harzes bei 350-500 mPa.s liegt und das Molarverhältnis der Oxide zwischen oder gleich ist
| | |
|---|---|
| Al₂O₃:M₂O | 1:1.0 and 1:1.6 |
| Al₂O₃:SiO₂ | 1:5.5 and 1:6.6 |
| M₂O:H₂O | 1:11.0 |
| Al₂O₃:F⁻ | 1:1 and 1:3 |
dann lässt man das besagte geopolymere Harz reifen, um die Auflösung besagten thermischen Silicafumes zu erlauben, die Viskosität nimmt dann ab bis zu einem Minium von 250-300 mPa.s; bei Beginn der Geopolymerisationsphase nimmt sie wieder zu; dies stellt die Phase dar bei der das geopolymere Harz gebrauchsbereit ist.

11. Verfahren zur Bereitung eines Geopolymers nach den Ansprüchen 6) und 9) dadurch gekennzeichnet, dass, um besagtes geopolymer Harz zu erhalten, man getrennt zubereitet:
a) eine wässerige Losung von Kaliumsilikat mit dem Molarverhältnis
| | |
|---|---|
| K₂O:SiO₂ | 1:1 |
in einer Konzentration von 50%,
b) ein Pulver, aus einem Aluminosilikatoxid (Si₂O₅,Al₂O₂) in welchem das Kation Al sich in IV-V Koordination befindet wie durch das ²⁷Al MAS-NMR Spektrum gezeigt wird, einem Natriumfluorosilikat Na₂SiF₆ und einem thermisches Silicafume (15Si₂O₅,Al₂O₂) besteht;
das geopolymerische Harz, das aus der Mischung des Bestandteile a)+b) hervorgeht, wobei der Wassergehalt unter 30 Gewichtsprozenten liegt, die Anfangsviskosität des geopolymeren Harzes bei 350-500 mPa.s liegt und das Molarverhältnis der Oxide zwischen oder gleich ist
| | |
|---|---|
| Al₂O₃:M₂O | 1:1.65 and 1:3.0 |
| Al₂O₃:SiO₂ | 1:6.65 and 1:10.95 |
| M₂O:H₂O | 1:6.35 |
| Al₂O₃:F⁻ | 1:3.10 and 1:7.95 |
dann lässt man das besagte geopolymere Harz reifen, um die Auflösung besagten thermischen Silicafumes zu erlauben, die Viskosität nimmt dann ab bis zu einem Minium von 250-300 mPa.s; bei Beginn der Geopolymerisationsphase nimmt sie wieder zu; dies stellt die Phase dar bei der das geopolymere Harz gebrauchsbereit ist.

12. Verfahren zur Bereitung eines Geopolymers nach den Ansprüchen 7) und 9) dadurch gekennzeichnet, dass, um besagtes geopolymer Harz zu erhalten, man getrennt zubereitet:
a) eine wässerige Losung von Kaliumsilikat mit dem Molarverhältnis
| | |
|---|---|
| K₂O:SiO₂ | 1:1 |
in einer Konzentration von 50%,
b) ein Pulver, aus einem Aluminosilikatoxid (Si₂O₅,Al₂O₂) in welchem das Kation Al sich in IV-V Koordination befindet wie durch das ²⁷Al MAS-NMR Spektrum gezeigt wird, einem Natriumfluorosilikat Na₂SiF₆ und einem thermisches Silicafume (15Si₂O₅,Al₂O₂) besteht;
das geopolymerische Harz, das aus der Mischung des Bestandteile a)+b) hervorgeht, wobei der Wassergehalt unter 30 Gewichtsprozenten liegt, die Anfangsviskosität des geopolymeren Harzes bei 350-500 mPa.s liegt und das Molarverhältnis der Oxide zwischen oder gleich ist
| | |
|---|---|
| Al₂O₃:M₂O | 1:3.1 and 1:20 |
| Al₂O₃:SiO₂ | 1:11 and 1:73 |
| M₂O:H₂O | 1:6.78 |
| Al₂O₃:F⁻ | 1:8.0 and 1:48 |
dann lässt man das besagte geopolymere Harz reifen, um die Auflösung besagten thermischen Silicafumes zu erlauben, die Viskosität nimmt dann ab bis zu einem Minium von 250-300 mPa.s; bei Beginn der Geopolymerisationsphase nimmt sie wieder zu; dies stellt die Phase dar bei der das geopolymere Harz gebrauchsbereit ist.

13. Gegenstände in jeder Form und Dimension, die durch Erhärten des nach irgend einem der Ansprüche 8) bis 12) erhaltenen geopolymeren Hartes, hergestellt werden kann, sei es durch Agglomeration mit mineralischen, metallischen und/oder organischen Füllstoffen, sei es durch Impregnieren von Fasern Geweben, Vliessen oder Filzen.

14. Oberflächenbelag der eine geopolymeriche Verbindung enthält, nach eigendeinem der Ansprüche 1) bis 7).
